# EUROPEAN PATENT APPLICATION

(11) **EP 3 896 915 A1**
(43) Date of publication of application: **20.10.2021**
(21) Application number: 19907076.4
(22) Date of filing: 31.12.2019
(51) Int. Cl.: H04L 12/28

(54) **DATA PROCESSING METHOD AND APPARATUS**

(30) Priority: 31.12.2018 CN 201811652064
(71) Applicant: Huawei Technologies Co., Ltd., Longgang District, Shenzhen, Guangdong 518129, (CN)
(72) Inventor: ZHOU, Zheng, Shenzhen, Guangdong 518129 (CN); NI, Hui, Shenzhen, Guangdong 518129 (CN); WAN, Lei, Shenzhen, Guangdong 518129 (CN); GAO, Yongqiang, Shenzhen, Guangdong 518129 (CN)
(74) Representative: Gill Jennings & Every LLP
(86) International application number: PCT/CN2019/130403
(87) International publication number: WO 2020/140890

(57) **Abstract**

This application provides a data processing method and apparatus, so that more inputs can be provided for data fusion, and a better data fusion effect can be achieved. The method includes: A first device obtains identification information of a second device; the first device receives a first message sent by the second device, where the first message includes original data, and the first message indicates the identification information.

## Description

### CROSS-REFERENCE TO RELATED APPLICATIONS

This application claims priority to Chinese Patent Application No. 201811652064.4, filed with the Chinese Patent Office on December 31, 2018 and entitled "DATA PROCESSING METHOD AND APPARATUS", which is incorporated herein by reference in its entirety.

### TECHNICAL FIELD

Embodiments of this application relate to the field of communications technologies, and in particular, to a data processing method and apparatus.

### BACKGROUND

With development of intelligent interconnection, automatic driving, electric vehicles, and shared travel, an electronic system integrated by software, a computing capability, and an advanced sensor becomes increasingly important. With improvement of an automatic driving degree of vehicles, complexity of the electronic system continuously increases, and a volume of data generated by the vehicles will be increasingly huge. Therefore, a new in-vehicle computing architecture is urgently required, which uses an existing high-performance processor to process the huge volume of data.

In the conventional technology, a relatively typical in-vehicle computing architecture oriented to automatic driving is a centralized computing architecture, which includes one or more distributed sensors, a plurality of vehicle control units, a central control unit including a high-performance processor, and the like. An entire data processing framework of the automatic driving includes four parts: perception, fusion, planning decision-making, and control. A process of processing sensor data is roughly as follows: A single sensor completes data conversion of the sensor, and sends a data conversion result to a central processing unit for data fusion. The central processing unit provides most effective inputs for subsequent behavior arbitration and path planning decision-making. A planning decision-making module outputs a decision-making result to an execution control unit to control a vehicle. A process of fusing the sensor data includes sensor data abstraction processing and sensor data fusion processing, in other words, sensing and fusion. The sensor data fusion processing may be implemented in the central control unit, which is also referred to as a mobile data center (mobile data center, MDC). The sensor data abstraction processing may be implemented on the distributed sensor or on the central control unit.

In a simple automatic driving scenario, for example, an adaptive cruise, completing related functions may require only one type of sensor. The sensor processes its own data and directly outputs a control command to control the vehicle. However, in an advanced automatic driving scenario, control and decision-making of the vehicle depend on perception of a real environment, and therefore, it is particularly critical to establish an environment model based on input data of the sensor. The environment model needs to be established based on input data of different types of sensors, to adapt to different weather, road conditions, and the like. An automatic driving vehicle may establish a near-real environment model in a digital world only after fusing the input data of the different types of sensors.

With development of sensor technologies, there are more and more types of sensors in the vehicle. Various sensors communicate with the central control unit through a high-speed bus. However, different data may be input for sensor data fusion, for example, data of different sensors, data of different instances of a same type of sensors, or different types of data of a same sensor. For a huge volume of input data of different types, how to realize an association between the sensor data to provide more effective inputs for data fusion has become a problem to be resolved.

### SUMMARY

Embodiments of this application provide a data processing method and apparatus, to resolve a problem of how to implement sensor data fusion for different data inputs.

Specific technical solutions provided in the embodiments of this application are as follows.

According to a first aspect, a data processing method is provided. The method is performed by a first device, and the method may be implemented by using the following steps: The first device obtains identification information of a second device; the first device receives a first message sent by the second device, where the first message includes original data; and the first message indicates the identification information. The first device may obtain a data source of the original data by using the identification information indicated in the first message, so that more inputs can be provided for data fusion, and a better data fusion effect can be achieved.

In a possible design, the first device receives a second message sent by a third device, where the second message includes first abstract data, and the second message indicates the identification information. The first device may obtain the data source of the first abstract data by using the identification information indicated by the second message, so that more inputs can be provided for data fusion, and a better data fusion effect can be achieved.

In a possible design, the second device and the third device are a same device. When the second device and the third device are the same device, the first device may further obtain an association relationship between the original data and the first abstract data based on the identification information indicated by the first message and the identification information indicated by the second message, so that more inputs can be provided for data fusion and a better data fusion effect can be achieved.

In a possible design, the first device establishes an association relationship between the original data and the first abstract data based on the identification information. By establishing the association relationship, the first device can better distinguish between different data, and better perform data fusion.

In a possible design, the first device determines second abstract data based on the original data.

In a possible design, the first device updates abstract data based on the original data, where the abstract data includes at least one of the first abstract data and the second abstract data. In this way, when the abstract data is inaccurate, original data corresponding to the abstract data can be found, and the abstract data can be updated based on the original data, so as to obtain accurate abstract data.

In a possible design, the first device establishes a data path of the original data based on the identification information. By binding the identification information to the data path of the original data, the first device, when receiving data in the data path of the original data, can determine a source of the received data.

In a possible design, the first device establishes a data path of the first abstract data based on the identification information. By binding the identification information to the data path of the first abstract data, the first device, when receiving data in the data path of the first abstract data, can determine a source of the received data.

In a possible design, the identification information includes any one or more of the following: an inherent identifier ID of the second device, an application layer ID allocated by the first device to the second device, an internet protocol IP address, a media access control MAC layer address, a port number, or a timestamp.

According to a second aspect, a data processing apparatus is provided, applied to a first device. The apparatus includes a data fusion module and a receiving module. The data fusion module is configured to obtain identification information of a second device; and the receiving module is configured to receive a first message sent by the second device, where the first message includes original data, and the first message indicates the identification information. Based on the identification information indicated by the first message, the first device may obtain a data source of the original data, so that more inputs can be provided for data fusion, and a better data fusion effect can be achieved.

In a possible design, the receiving module is further configured to: receive a second message sent by a third device, where the second message includes first abstract data, and the second message indicates the identification information. Based on the identification information indicated by the second message, the first device may obtain data source of the first abstract data, so that more inputs can be provided for data fusion, and a better data fusion effect can be achieved.

In a possible design, the second device and the third device are a same device. When the second device and the third device are the same device, the first device may further obtain an association relationship between the original data and the first abstract data based on the identification information indicated by the first message and the identification information indicated by the second message, so that more inputs can be provided for data fusion and a better data fusion effect can be achieved.

In a possible design, the data fusion module is further configured to: establish an association relationship between the original data and the first abstract data based on the identification information. By establishing the association relationship, the first device can better distinguish between different data, and better perform data fusion.

In a possible design, the apparatus further includes a data abstraction module, where the data abstraction module is configured to determine second abstract data based on the original data.

In a possible design, the data fusion module is further configured to: update abstract data based on the original data, where the abstract data includes at least one of the first abstract data and the second abstract data. In this way, when the abstract data is inaccurate, original data corresponding to the abstract data can be found, and the abstract data can be updated based on the original data, so as to obtain accurate abstract data.

In a possible design, the data fusion module is further configured to: establish a data path of the original data based on the identification information. By binding the identification information to the data path of the original data, the first device, when receiving data in the data path of the original data, can determine a source of the received data.

In a possible design, the data fusion module is further configured to: establish a data path of the first abstract data based on the identification information. By binding the identification information to the data path of the first abstract data, the first device, when receiving data in the data path of the first abstract data, can determine a source of the received data.

In a possible design, the identification information includes any one or more of the following: an inherent identifier ID of the second device, an application layer ID allocated by the first device to the second device, an internet protocol IP address, a media access control MAC layer address, a port number, or a timestamp.

In a possible design, the apparatus is a chip or an integrated circuit. The receiving module is an input/output circuit or interface of the chip or an input/output circuit or interface of the integrated circuit.

In a possible design, the apparatus is an MDC.

According to a third aspect, a chip is provided. The chip is denoted as a first chip, the first chip includes a data fusion module and a receiving module. The data fusion module is configured to obtain identification information of a second device, and the receiving module is configured to receive a first message sent by the second device, where the first message includes original data, and the first message indicates the identification information. Based on the identification information indicated in the first message, the first device may obtain a data source of the original data, so that more inputs can be provided for data fusion, and a better data fusion effect can be achieved.

In a possible design, the receiving module is further configured to: receive a second message sent by a third device, where the second message includes first abstract data, and the second message indicates the identification information. Based on the identification information indicated by the second message, the first device may obtain data source of the first abstract data, so that more inputs can be provided for data fusion, and a better data fusion effect can be achieved.

In a possible design, the second device and the third device are a same device. When the second device and the third device are the same device, the first device may further obtain an association relationship between the original data and the first abstract data based on the identification information indicated by the first message and the identification information indicated by the second message, so that more inputs can be provided for data fusion and a better data fusion effect can be achieved.

In a possible design, the data fusion module is further configured to: establish an association relationship between the original data and the first abstract data based on the identification information. By establishing the association relationship, the first device can better distinguish between different data, and better perform data fusion.

In a possible design, the data fusion module is further configured to receive second abstract data from a second chip.

In a possible design, the data fusion module is further configured to: update abstract data based on the original data, where the abstract data includes at least one of the first abstract data and the second abstract data. In this way, when the abstract data is inaccurate, original data corresponding to the abstract data can be found, and the abstract data can be updated based on the original data, so as to obtain accurate abstract data.

In a possible design, the data fusion module is further configured to: establish a data path of the original data based on the identification information. By binding the identification information to the data path of the original data, the first device, when receiving data in the data path of the original data, can determine a source of the received data.

In a possible design, the data fusion module is further configured to: establish a data path of the first abstract data based on the identification information. By binding the identification information to the data path of the first abstract data, the first device, when receiving data in the data path of the first abstract data, can determine a source of the received data.

In a possible design, the identification information includes any one or more of the following: an inherent identifier ID of the second device, an application layer ID allocated by the first device to the second device, an internet protocol IP address, a media access control MAC layer address, a port number, or a timestamp.

According to a fourth aspect, a data processing apparatus is provided. The apparatus has a function of implementing any one of the first aspect or the possible designs of the first aspect. The function may be implemented by hardware, or may be implemented by hardware executing corresponding software. The hardware or software includes one or more modules corresponding to the function.

Optionally, the data processing apparatus may be a chip or an integrated circuit.

In a possible design, when the function is partially or fully implemented by software, the data processing apparatus includes a processor and a transceiver. The processor is configured to execute a program. When the program is executed, the data processing apparatus may implement the method according to any one of the first aspect or the possible designs of the first aspect. The transceiver is configured to communicate with another device, for example, to receive a first message sent by a second device. Optionally, a memory is further included, and is configured to store the program executed by the processor.

Optionally, the memory may be a physically independent unit, or may be integrated with the processor.

In a possible design, when the function is partially or fully implemented by software, the data processing apparatus includes a processor. A memory configured to store a program is located outside the data processing apparatus. The processor is connected to the memory through a circuit/an electric wire, and is configured to read and execute the program stored in the memory.

According to a fifth aspect, a computer storage medium is provided. The computer storage medium stores a computer program. The computer program includes instructions used to perform the method in the foregoing aspects.

According to a sixth aspect, a computer program product including instructions is provided. When the computer program product runs on a computer, the computer is enabled to perform the method in the foregoing aspects.

According to a seventh aspect, a communications system is provided, including an MDC and one or more sensors. The MDC is configured to perform the method in any one of the first aspect or the possible designs of the first aspect.

### BRIEF DESCRIPTION OF DRAWINGS

FIG. 1 is a schematic diagram of a computing architecture for processing automatic driving data according to an embodiment of this application;
FIG. 2 is a schematic diagram of a system architecture according to an embodiment of this application;
FIG. 3 is a schematic diagram of a data processing model according to an embodiment of this application;
FIG. 4 is a schematic flowchart of a data processing method according to an embodiment of this application;
FIG. 5 is a schematic diagram of a sensor identification information obtaining method according to an embodiment of this application;
FIG. 6 is a schematic flowchart 1 of a data processing method in an application scenario 1 according to an embodiment of this application;
FIG. 7 is a schematic flowchart 2 of a data processing method in an application scenario 1 according to an embodiment of this application;
FIG. 8 is a schematic flowchart of a data processing method in an application scenario 2 according to an embodiment of this application;
FIG. 9A and FIG. 9B are a schematic flowchart of a data processing method in application scenario 3 according to an embodiment of this application;
FIG. 10 is a schematic structural diagram 1 of a data processing apparatus according to an embodiment of this application; and
FIG. 11 is a schematic structural diagram 2 of a data processing apparatus according to an embodiment of this application.

### DESCRIPTION OF EMBODIMENTS

The following describes in detail embodiments of this application with reference to accompanying drawings.

A data processing method provided in the embodiments of this application may be applied to an intelligent transportation system. The data processing method is applied to a terminal. In the intelligent transportation system, the terminal may be a vehicle, for example, an intelligent vehicle. The method provided in this application may be applied to an intelligent transportation service, for example, automatic driving, electric vehicle driving, and shared travel. An electronic system is disposed in the terminal, and the electronic system implements the intelligent transportation service by using an intelligent interconnection, software, an artificial intelligence element, an advanced analysis tool, an operating system, or the like. Software and electronic technologies are used to improve a user interaction interface and experience. Certainly, the method provided in this application is not limited to the foregoing scenarios.

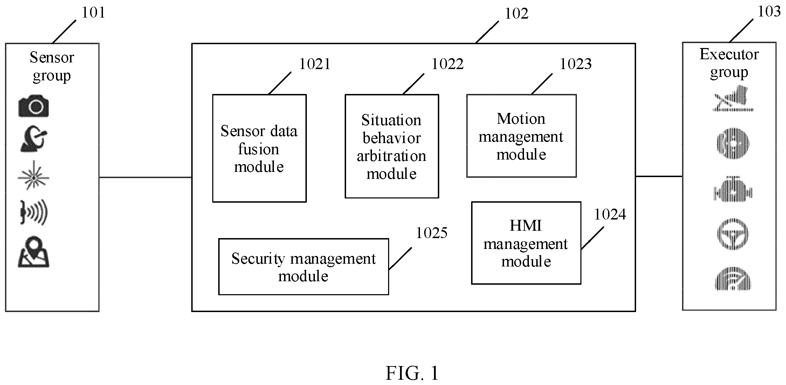

Automatic driving data processing is used as an example. As shown in FIG. 1, a computing architecture of the automatic driving data processing includes a sensor group 101, an MDC 102, and an executor group 103.

The sensor group 101 includes one or more sensors. Different sensors have different functions. For example, functions of a sensor may include a global positioning system (global positioning system, GPS), a sonar, a camera, a radar, and a lidar. Existing vehicle-mounted sensors, which have many types, are roughly classified into three types: an internal sensor, an external sensor, and a metadata sensor.

The internal sensor is typically mounted on or inside an automobile, focuses on the automobile, and is used to measure dynamic statuses of the automobile and other internal data. Typical internal sensors include a gyroscope, an accelerometer, a steering angle sensor, a wiper motion sensor, a steering indicator, and the like.

The external sensor is usually mounted on or inside an automobile, focuses on surroundings of the automobile, and measures the environment of the automobile. Typical external sensors include a radar, a laser, an ultrasonic sensor, and a camera.

The metadata sensor is generally used to obtain a data source of measurement. Typical metadata sensors include cloud data, a navigation map, and vehicle to everything (V2X).

The MDC 102 is configured to: process data of the sensor group 101, and generate an execution command for controlling the executor group 103. The MDC 102 may be planned as different management modules to perform different functions. For example, the MDC 102 includes a sensor data fusion module 1021, a situation behavior arbitration module 1022, a motion management module 1023, a human machine interface (human machine interface, HMI) management module 1024, and a security management module 1025.

The sensor data fusion module 1021 is configured to compute an environment model and a model of a vehicle status and a capability. The whole environment model is established by abstract data inputs of the sensor, where the environment model is a key input of subsequent planning decision. The more near-real the environment model is, the more helpful it is for a planning decision module to make a right decision. Construction of the environment model includes positioning, a vehicle location, vehicle dynamics, an object, an object in an environment, a fleet track, a grid fusion, an occupied grid, a fusion of a road and a lane, the road and the lane, a vehicle database, and the like.

The executor group 103 includes one or more executors. The executor is used to obtain the execution command from the MDC and execute a corresponding solution, for example, braking and steering.

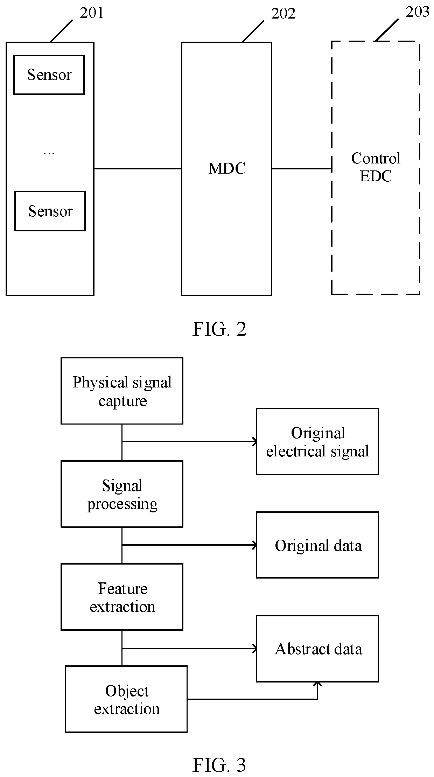

In a possible implementation, the method provided in this embodiment of this application relates to communication between the sensor group 101 and the MDC 102. Based on some modules in a system architecture in this application, as shown in FIG. 2, a system architecture to which the method provided in this embodiment of this application is applicable includes one or more sensors 201 and an MDC 202.

The sensor 201 is configured to collect original data corresponding to a function of the sensor. For example, a camera sensor collects shooting or photographing data. Optionally, the sensor 201 may further have a data processing function, that is, process the collected original data, for example, perform feature extraction or target extraction on the original data, to obtain abstract data. The sensor sends the original data and/or the abstract data to the MDC. The sensor 201 may use an electronic control unit (electronic control unit, ECU) located on the sensor to perform an operation of the foregoing function.

The MDC 202 is a central high-performance computing platform on the terminal. The MDC 202 is configured to: obtain the original data and/or the abstract data of the sensor 201, and fuse different data to establish an environment model. The MDC 202 uses the original data and the abstract data to reconstruct a real environment. The MDC 202 may further perform extraction on the original data, for example, perform feature extraction or target extraction on the original data, to obtain the abstract data.

Optionally, the system architecture may further include a control EDC 203. The ECU 203 is an electronic control unit responsible for vehicle body and power control.

The foregoing describes the architecture as an environment architecture to which the data processing method provided in this application can be applied, so as to facilitate understanding of the data processing method provided in this application. However, the architecture is not limited to the foregoing environment architecture.

More generally, the data processing method provided in this embodiment of this application may be performed by a first device, and the first device may communicate with another device such as a second device or a third device. For example, the first device may be the foregoing MDC, and the second device and the third device may be the foregoing sensors. The following describes in detail the data processing method provided in the embodiments of this application with reference to the accompanying drawings.

As shown in FIG. 3, understanding of the original data and the abstract data in this application is described as follows. After capturing a physical signal, a sensor obtains an original electrical signal, and performs signal processing, for example, analog-to-digital conversion, on the original electrical signal to obtain the original data. The sensor processes the original data to obtain the abstract data, for example, performs feature extraction or target extraction on the original data to obtain the abstract data.

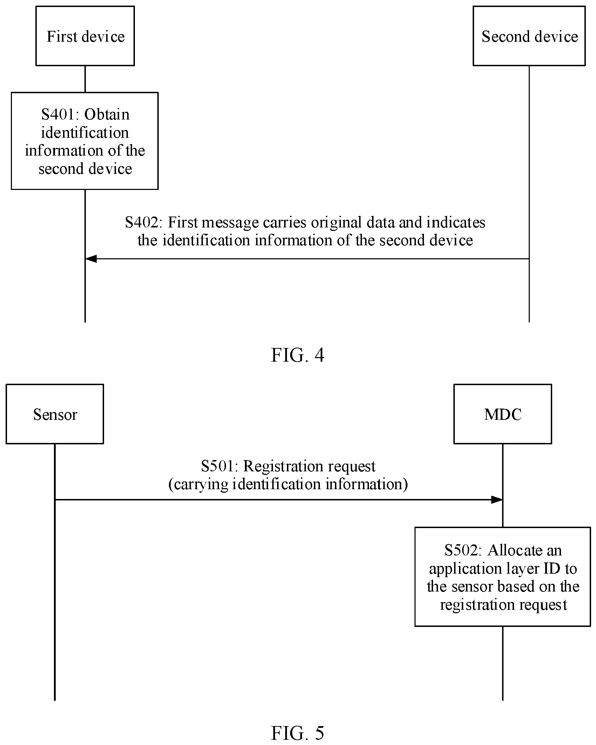

As shown in FIG. 4, a process of a data processing method provided in an embodiment of this application is described as follows.

S401: A first device obtains identification information of a second device.

The identification information is any information that can identify the second device. The identification information includes any one or more of the following: an inherent identifier (identity, ID) of the second device, an application layer ID allocated by the first device to the second device, an internet protocol (internet protocol, IP) address, a media access control (media access control, MAC) layer address, a port number, or a timestamp.

The identification information is described in detail by using an example in which the second device is a sensor. Explanations of identification information of any type of second device may be obtained similarly by using the identification information of the sensor.
(1) The identification information of the sensor may be a transport layer address or a data link layer address. The following is an example.
   For example, the identification information of the sensor may be an inherent ID of a sensor device, which may be a factory device ID of the sensor, including a sensor type (a), manufacturer information (b), product model information (c), and a product serial number (d).
   For another example, the identification information of the sensor may be an IP address, including an IPv4/IPv6 transport layer address.
   For another example, the identification information of the sensor may be a MAC address.
   For another example, the identification information of the sensor may be a random number generated based on a key.
   For another example, the identification information of the sensor may be a temporary ID allocated to the sensor itself.
   For another example, the identification information of the sensor may be a sensor ID that is allocated by a system to the sensor and that is obtained by using a configuration file, including a sensor type and a serial number. The serial number can be generated based on installation position information of the sensor, a registration sequence, or a capability.
(2) The identification information of the sensor may be the application layer ID, which is specifically an application layer ID allocated by a central processing unit to the sensor in a sensor registration process, and is used to identify the sensor in a communication process. The central processing unit is an MDC. The following uses FIG. 5 to describe in detail a method for obtaining the identification information of the sensor in (2).

S402: The first device receives a first packet sent by the second device.

The first message includes the original data, and the first message indicates the identification information.

Manners in which the first message indicates the identification information may include but is not limited to two manners.

In a first manner, the first message carries the identification information.

In a second manner, the identification information is indicated by using a channel for transmitting the first message.

Based on the second manner, in this embodiment of this application, before receiving the first message sent by the second device, the first device establishes a data path of the original data based on the identification information of the second device. The data path of the original data is used to transmit the original data. In a process of establishing the data path of the original data, a first channel identifier is configured for the data path of the original data, and the first channel identifier is determined based on the identification information of the second device, or the first channel identifier is the identification information of the second device. For example, the first channel identifier is an ID of the second device. When receiving the first message through the data path of the original data, the first device may determine, based on the first channel identifier, that the original data carried in the first message is from the second device. For example, the second device is a sensor. The first device may receive original data sent by sensors of different types, or may receive original data sent by different instances of a same sensor. If each data path corresponds to one first channel identifier, the first device may distinguish a data source of the original data based on the first channel identifier.

For the abstract data, in this application, the second device (or another device such as the third device) may determine the abstract data, and send the abstract data to the first device. The first device receives the abstract data from the second device (or the another device such as the third device), which is denoted as first abstract data. Alternatively, the first device may determine the abstract data, which is denoted as second abstract data. Alternatively, the first device may receive the first abstract data from the second device (or the another device such as the third device), determine the second abstract data based on the original data, and use the first abstract data and the second abstract data together or select one of the first abstract data and the second abstract data for use. If the second device (or the another device such as the third device) determines the abstract data and sends the abstract data to the first device, a sequence in which the first device receives the abstract data from the second device (or the another device such as the third device) and receives the original data from the second device is not limited in this application. The first device may receive the original data first, or may receive the abstract data first. Based on this, in this embodiment of this application, the first device obtains the identification information of the second device, and the first device receives the second message sent by the third device. The second message includes the first abstract data, and the second message indicates the identification information. This can independently form the solution that claims protection in this application. The first device receives the first message sent by the second device. The first message includes the original data, and the first message indicates the identification information. This is used as a subordinate solution of the solution.

Based on a solution in which the second device (or the another device such as the third device) determines the first abstract data, in this embodiment of this application, the first device may further receive the second message sent by the another device (which may be denoted as the third device). The second message includes the first abstract data, and the second message indicates the identification information. The identification information indicated by the second message may be the same as the identification information indicated by the first message, for example, both are the ID of the second device. Alternatively, the identification information indicated by the second message and the identification information indicated by the first message may be not the same but of a same type, and are used to identify a same device. For example, the identification information indicated by the second message is the ID of the second device, and the identification information indicated by the first message is an IP address of the second device. The first device determines, based on the identification information indicated by the first message and the identification information indicated by the second message, that the original data in the first message and the first abstract data in the second message come from a same device. In other words, the second device and the third device are the same device. Alternatively, it may be determined that there is an association relationship between the original data in the first message and the first abstract data in the second message, so as to establish an association relationship between the original data in the first message and the first abstract data in the second message.

Similarly, based on a solution of determining the first abstract data by the second device (or the another device such as the third device), before receiving the second message sent by the second device, the first device establishes a data path of the first abstract data based on the identification information of the second device. The data path of the first abstract data is used to transmit the first abstract data. In a process of establishing the data path of the first abstract data, a second channel identifier is configured for the data path of the first abstract data. The second channel identifier is determined based on the identification information of the second device, or the second channel identifier is the identification information of the second device. For example, the second channel identifier is the ID of the second device. When receiving the second message by using the data path of the first abstract data, the first device may determine, based on the second channel identifier, that the first abstract data carried in the second message is from the second device. For example, the second device is a sensor. The first device may receive first abstract data sent by sensors of different types, or may receive first abstract data sent by different instances of a same sensor. If each data path of the abstract data corresponds to one second path identifier, the first device may distinguish a data source of the first abstract data based on the second path identifier. Herein, the identification information indicated by the second message may alternatively be the second channel identifier, and the identification information indicated by the first message may alternatively be the first channel identifier. In this way, the first device may determine, based on the first channel identifier and the second channel identifier, that the original data in the first message and the first abstract data in the second message come from a same device and have an association relationship.

If the first device determines the abstract data (denoted as the second abstract data), the first device obtains the original data from the second device, and processes the original data to obtain the second abstract data.

Regardless of the first abstract data or the second abstract data, the first abstract data and the second abstract data may be collectively referred to as abstract data. The first device may update the abstract data based on the original data. For example, the first device determines, based on the association relationship between the first abstract data and the original data, original data that has the association relationship with the first abstract data, and performs processing such as update or improvement on the first abstract data, so that the abstract data is more accurate.

When the first device obtains the first abstract data from the second device, and determines the second abstract data based on the original data, the first device obtains two pieces of abstract data: the first abstract data and the second abstract data. In this case, the first device may check the second abstract data based on the first abstract data, or may check the first abstract data based on the second abstract data.

In conclusion, the first device may obtain the association relationship between the at least two of the original data, the first abstract data, or the second abstract data and the source of the at least one of the original data, the first abstract data, or the second abstract data by using the identification information, so that more input information is provided for data fusion, and better data fusion can be achieved.

When the identification information is a timestamp, the first device may further obtain data of different types of sensors at a same moment, or obtain data of different sensor instances at a same moment, or obtain the original data and the abstract data at a same moment. An association relationship between at least two of the original data, the first abstract data, or the second abstract data at the same moment is obtained based on the timestamp. For example, the two sensors are respectively a left camera and a right camera of the terminal, and data of the two cameras at the same moment is obtained, so that more input information is provided for data fusion, better data fusion is achieved.

In the following, as shown in FIG. 5, a method for obtaining identification information of a sensor in (2) is described as follows.

S501: A sensor sends a registration request of the sensor to an MDC.

The registration request of the sensor carries one or more of all the examples in the foregoing identification information of the sensor in (1). The registration request of the sensor may further include information such as an installation location and a sensor capability.

S502: The MDC may allocate a unique sensor identifier in a system, that is, an application layer ID, to the sensor based on the registration request of the sensor.

The application layer ID may include a sensor type and a serial number, and the serial number may be generated based on installation location information of the sensor, a registration sequence, a capability, or the like. If the sensor in S501 sends a temporary ID allocated by the sensor, the MDC may also generate a corresponding temporary ID, and subsequently the sensor and the MDC are identified by using the two temporary IDs.

Based on the descriptions of the foregoing solutions, the following further describes the data processing method in the embodiments of this application in detail with reference to a specific application scenario. For example, the first device is the MDC, and the second device is the sensor. One or more sensors may transmit data by establishing the data path. As described above, there are three application scenarios. The following describes the three scenarios separately.

For more and more sensor types, sensor data fusion involves fusion of different data, for example, data from different sensors, data from different instances of a same type of sensors, or different data of a same sensor. Therefore, different data needs to be associated, so that more information inputs are provided for sensor data fusion, and better sensor data fusion is implemented.

Application scenario 1: The sensor may process original data to obtain abstract data, and send the abstract data to the MDC.

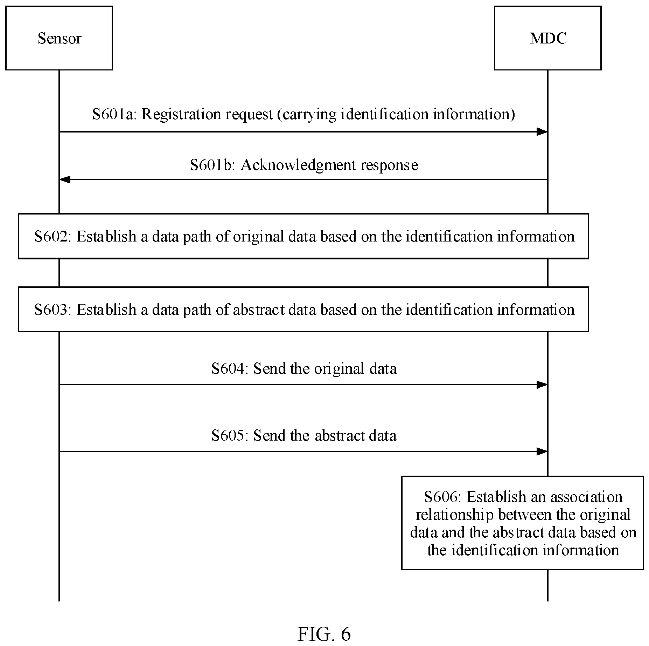

As shown in FIG. 6, a specific process of the data processing method in the application scenario 1 is described as follows.

S601a: A sensor sends a registration request to an MDC, and the MDC receives the registration request sent by the sensor.

For a related description of the registration request, refer to the description of the registration request in S501. In addition, the registration request may further include information such as a sensor type, a sensor capability, or a sensor installation location.

Optionally, before S601a, the sensor is powered on and initialized.

S601b: The MDC sends an acknowledgment response to the sensor.

The acknowledgment response is used to respond to the registration request, and is used to notify a registration result.

Optionally, if the method for obtaining the identification information of the sensor in (2) is used, the MDC may further perform an operation such as S502. In other words, the MDC may further allocate a unique sensor identifier in a system to the sensor based on the registration request that is sent by the sensor and obtained in S601a. For a specific method for allocating the identification information to the sensor, refer to S502. Details are not described again.

S602: The MDC establishes or configures a data path of original data between the MDC and the sensor.

This step may be understood as including two steps: S601a and S601b. Alternatively, S601a and S601b may be understood as steps independent of S602, and are equivalent to preparation steps before S602. Optionally, S602 may further include another step. This is not specifically described in this application.

The MDC establishes or configures the data path for the original data based on the identification information of the sensor that is included in the registration request.

The data path of the original data may be a specific connection of the data, a specific memory block, or a dedicated data path. Establishing or configuring the data path of the original data is to bind the identification information of the sensor with the data path of the original data. In this way, when receiving the original data by using the data path of the original data, the MDC may determine a source of the original data based on the identification information bound to the data path of the original data.

S603: The MDC establishes or configures a data path of abstract data between the MDC and the sensor.

Similarly, it may be understood that step S603 includes two steps: S601a and S601b. Alternatively, S601a and S601b may be understood as steps independent of S603, and are equivalent to preparation steps before S603. Optionally, S603 may further include another step. This is not specifically described in this application.

The MDC establishes or configures the data path of the abstract data based on the identification information of the sensor that is included in the registration request.

The data path of the abstract data may be a specific connection of the data, a specific memory block, or a dedicated data path. Establishing or configuring the data path of the abstract data is to bind the identification information of the sensor with the data path of the abstract data. In this way, when receiving the abstract data by using the data path of the abstract data, the MDC may determine a source of the abstract data based on the identification information bound to the data path of the abstract data.

So far, the data path of the original data and the data path of the abstract data between the sensor and the MDC have been established. In the application scenario 1, steps S604 to S606 may be further included.

S604: The sensor sends the original data to the MDC, and the MDC receives the original data sent by the sensor.

Specifically, the sensor sends the original data to the MDC by using the data path of the original data. In other words, the MDC receives, by using the data path of the original data, the original data sent by the sensor. The MDC may receive data of a plurality of sensors. In this way, the MDC determines, based on identification information of the data path of the original data, that the source of the received original data is the sensor.

S605: The sensor sends the abstract data to the MDC, and the MDC receives the abstract data sent by the sensor.

Specifically, the sensor sends the abstract data to the MDC by using the data path of the abstract data. In other words, the MDC receives, by using the data path of the abstract data, the abstract data sent by the sensor. The MDC may receive data of a plurality of sensors. In this way, the MDC determines, based on identification information of the data path of the abstract data, that the source of the received abstract data is the sensor.

S606: The MDC establishes an association relationship between the received original data and the abstract data based on the identification information of the data path of the original data and the identification information of the data path of the abstract data.

Both the original data and the abstract data may carry information about a timestamp, or the identification information may be a timestamp. The MDC may also associate the original data with the abstract data based on the timestamp information. Alternatively, the MDC may associate data of different types of sensors based on timestamps, or associate data of different instances of sensors of a same type based on timestamps. The type refers to a function or model of the sensor.

By using the association relationship, the MDC may perform processing such as update or improvement on the associated abstract data based on the original data.

In a possible implementation, the sensor includes two function modules: a signal processing module and a data processing module. The signal processing module is configured to output the original data, and the data processing module is configured to output the abstract data.

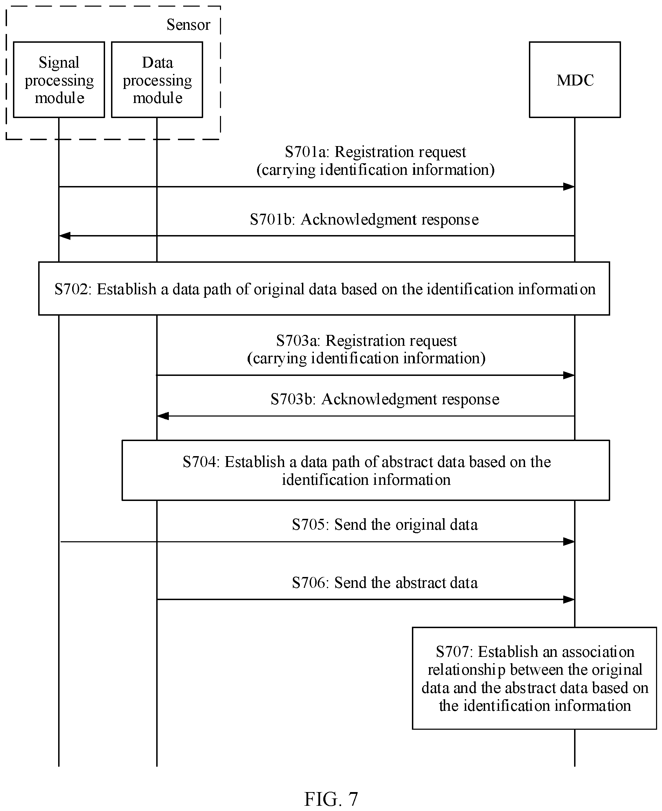

Based on this, as shown in FIG. 7, the specific process of the data processing method in the application scenario 1 is detailed as follows. The method described in FIG. 7 is different from the method described in FIG. 6 only in division of two modules in the sensor. Functions of the sensor in FIG. 6 are implemented by two functional modules. For example, descriptions of various messages such as a registration request and an acknowledgment response, and detailed descriptions of all steps are the same as those in the method shown in FIG. 6. For details, refer to the method shown in FIG. 6. Details are not described again.
S701a: A signal processing module of a sensor sends a registration request to an MDC, and the MDC receives the registration request sent by the signal processing module of the sensor.
S701b: The MDC sends an acknowledgment response to the signal processing module of the sensor.
S702: The MDC establishes or configures a data path of original data between the MDC and the signal processing module of the sensor.
S703a: A data processing module of the sensor sends a registration request to the MDC, and the MDC receives the registration request sent by the data processing module of the sensor.
S703b: The MDC sends an acknowledgment response to the data processing module of the sensor.
S704: The MDC establishes or configures a data path of abstract data between the MDC and the data processing module of the sensor.

Optionally, S705 to S707 may be further performed.
S705: The signal processing module of the sensor sends the original data to the MDC, and the MDC receives the original data sent by the signal processing module of the sensor.
S706: The data processing module of the sensor sends the abstract data to the MDC, and the MDC receives the abstract data sent by the data processing module of the sensor.
S707: The MDC establishes an association relationship between the received original data and the abstract data based on identification information of the data path of the original data and identification information of the data path of the abstract data.

Application scenario 2: A sensor sends only original data to an MDC, and the MDC processes the original data to obtain abstract data.

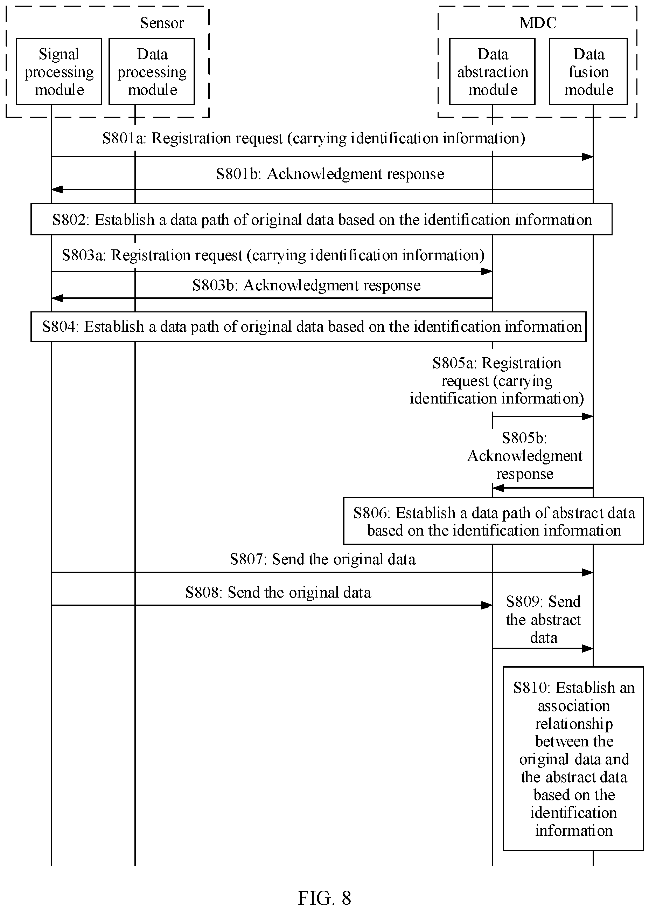

A specific process of the data processing method in the application scenario 2 is the same as the process in the application scenario 1 shown in FIG. 6. When functions of the sensor are implemented by using two function modules: a signal processing module and a data processing module, and functions of the MDC are implemented by using two modules: a data abstraction module and a data fusion module, as shown in FIG. 8, a specific method in the application scenario 2 is described as follows. Similarly, in the method shown in FIG. 8, a different lies only in that execution of the sensor and the MDC is implemented by using different functional modules. For example, descriptions of various messages such as a registration request and an acknowledgment response and detailed descriptions of all steps are the same as those in the method shown in FIG. 6. For details, refer to the method shown in FIG. 6. Details are not described again.
S801a: A signal processing module of a sensor sends a registration request to a data fusion module of an MDC, and the data fusion module of the MDC receives the registration request sent by the signal processing module of the sensor.
S801b: The data fusion module of the MDC sends an acknowledgment response to the signal processing module of the sensor.
S802: The data fusion module of the MDC establishes or configures a data path of original data between the data fusion module of the MDC and the signal processing module of the sensor.

In this way, the signal processing module of the MDC may transmit the original data to the data fusion module of the MDC by using the data path.
S803a: The signal processing module of the sensor sends a registration request to a data abstraction module of the MDC, and the data abstraction module of the MDC receives the registration request sent by the signal processing module of the sensor.
S803b: The data abstraction module of the MDC sends an acknowledgment response to the signal processing module of the sensor.
S804: The data abstraction module of the MDC suggests or configures a data path of original data between the data abstraction module of the MDC and the signal processing module of the sensor.

In this way, the signal processing module of the MDC may transmit the original data to the data abstraction module of the MDC by using the data path.

The data abstraction module of the MDC can process the original data to obtain abstract data.

S805a: The data abstraction module of the MDC sends a registration request to the data fusion module of the MDC, and the data fusion module of the MDC receives the registration request sent by the data abstraction module of the MDC.
S805b: The data fusion module of the MDC sends an acknowledgment response to the data abstraction module of the MDC.
S806: The data fusion module of the MDC suggests or configures a data path of abstract data between the data fusion module of the MDC and the data abstraction module of the MDC.

In this way, the data abstraction module of the MDC may transmit and process the obtained abstract data to the data fusion module of the MDC by using the data path.

Optionally, S807 to S809 may be further performed.
S807: The signal processing module of the sensor sends the original data to the data fusion module of the MDC, and the data fusion module of the MDC receives the original data sent by the signal processing module of the sensor.
S808: The signal processing module of the sensor sends the original data to the data abstraction module of the MDC, and the data abstraction module of the MDC receives the original data sent by the signal processing module of the sensor.

The data fusion module processes the received original data to obtain abstract data.
S809: The data abstraction module of the MDC sends the obtained abstract data to the data fusion module of the MDC, and the data fusion module of the MDC receives the abstract data from the data abstraction module of the MDC.
S810: The data fusion module of the MDC establishes an association relationship between the original data and the abstract data based on identification information.

Application scenario 3: With reference to the application scenario 1 and the application scenario 2, not only the sensor sends the original data and the abstract data to the MDC, but also the MDC processes the original data to obtain the abstract data.

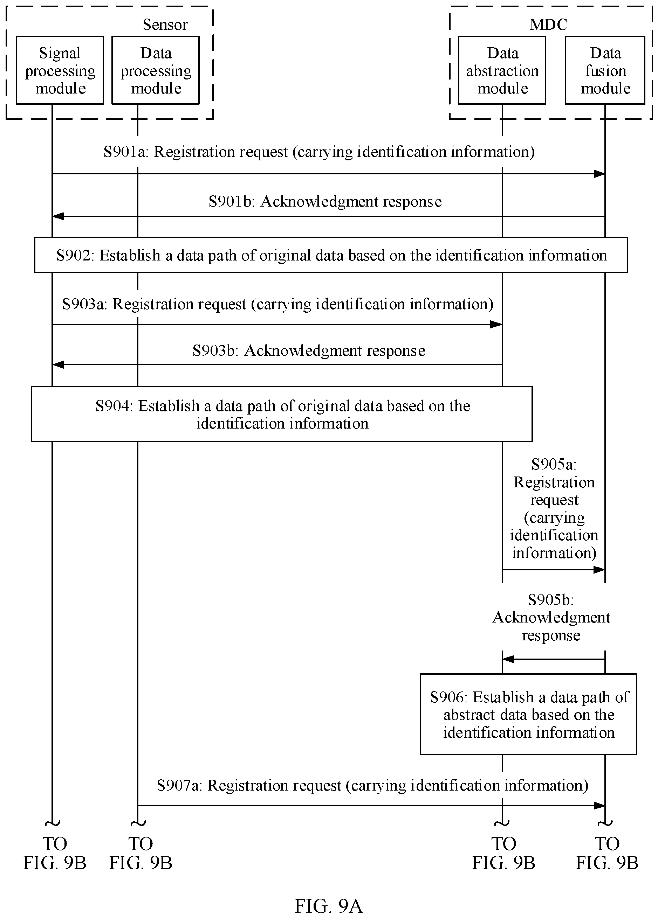

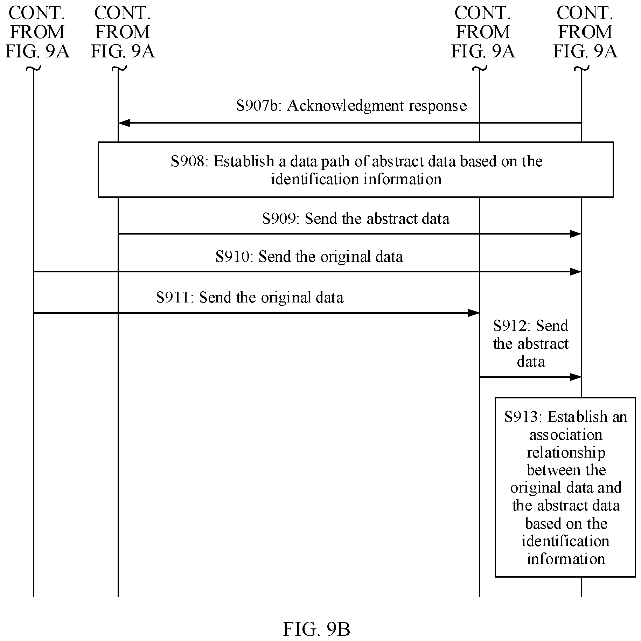

A specific process of the data processing method in the application scenario 3 is the same as the process in the application scenario 1 shown in FIG. 6. When functions of the sensor are implemented by using two function modules: a signal processing module and a data processing module, and functions of the MDC are implemented by using two modules: a data abstraction module and a data fusion module, as shown in FIG. 9A and FIG. 9B, a specific method in the application scenario 3 is described as follows. Similarly, in the method shown in FIG. 9A and FIG. 9B, a different lies only in that execution of the sensor and the MDC is implemented by using different functional modules. For example, descriptions of various messages such as a registration request and an acknowledgment response and detailed descriptions of all steps are the same as those in the method shown in FIG. 6. For details, refer to the method shown in FIG. 6. Details are not described again.
S901a: A signal processing module of a sensor sends a registration request to a data fusion module of an MDC, and the data fusion module of the MDC receives the registration request sent by the signal processing module of the sensor.
S901b: The data fusion module of the MDC sends an acknowledgment response to the signal processing module of the sensor.
S902: The data fusion module of the MDC establishes or configures a data path of original data between the data fusion module of the MDC and the signal processing module of the sensor.

In this way, the signal processing module of the MDC may transmit the original data to the data fusion module of the MDC by using the data path.
S903a: The signal processing module of the sensor sends a registration request to a data abstraction module of the MDC, and the data abstraction module of the MDC receives the registration request sent by the signal processing module of the sensor.
S903b: The data abstraction module of the MDC sends an acknowledgment response to the signal processing module of the sensor.
S904: The data abstraction module of the MDC suggests or configures a data path of original data between the data abstraction module of the MDC and the signal processing module of the sensor.

In this way, the signal processing module of the MDC may transmit the original data to the data abstraction module of the MDC by using the data path.

The data abstraction module of the MDC can process the original data to obtain abstract data.
S905a: The data abstraction module of the MDC sends a registration request to the data fusion module of the MDC, and the data fusion module of the MDC receives the registration request sent by the data abstraction module of the MDC.
S905b: The data fusion module of the MDC sends an acknowledgment response to the data abstraction module of the MDC.
S906: The data fusion module of the MDC suggests or configures a data path of abstract data between the data fusion module of the MDC and the data abstraction module of the MDC.

In this way, the data abstraction module of the MDC may transmit and process the obtained abstract data to the data fusion module of the MDC by using the data path.
S907a: The data processing module of the sensor sends a registration request to the data fusion module of the MDC, and the data fusion module of the MDC receives the registration request sent by the data processing module of the sensor.
S907b: The data fusion module of the MDC sends an acknowledgment response to the data processing module of the sensor.
S908: The data fusion module of the MDC establishes or configures a data path of the abstract data between the data fusion module of the MDC and the data processing module of the sensor.

Optionally, S909 to S912 may be further performed.
S909: The data processing module of the sensor sends the abstract data to the data fusion module of the MDC, and the data fusion module of the MDC receives the abstract data sent by the data processing module of the sensor, which is denoted as first abstract data.
S910: The signal processing module of the sensor sends the original data to the data fusion module of the MDC, and the data fusion module of the MDC receives the original data sent by the signal processing module of the sensor.
S911: The signal processing module of the sensor sends the original data to the data abstraction module of the MDC, and the data abstraction module of the MDC receives the original data sent by the signal processing module of the sensor.

The data fusion module processes the received original data to obtain abstract data, which is denoted as second abstract data.
S912: The data abstraction module of the MDC sends the obtained second abstract data to the data fusion module of the MDC, and the data fusion module of the MDC receives the second abstract data from the data abstraction module of the MDC.
S913: The data fusion module of the MDC establishes an association relationship between at least two of the original data, the first abstract data, and the second abstract data based on identification information.

There is no strict sequence for establishing the data paths in the foregoing application scenario 1 to application scenario 3. In addition to the sequence described in the foregoing embodiment, the sequence may be exchanged.

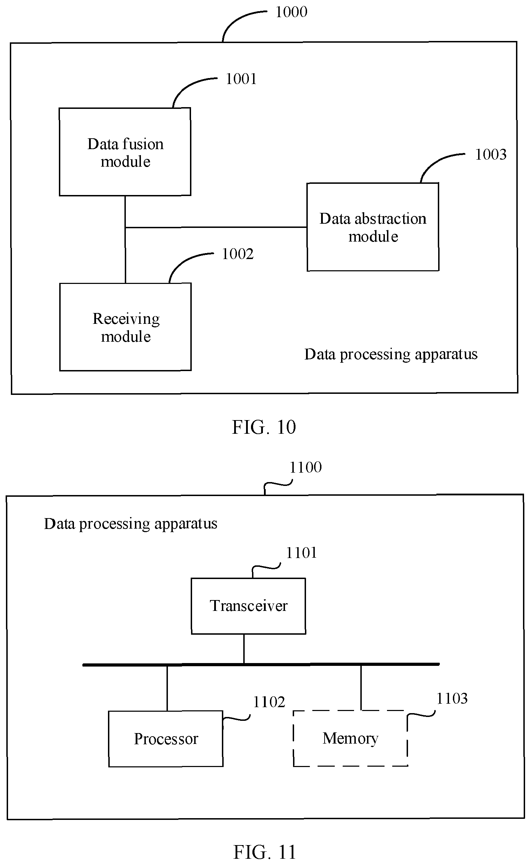

Based on a same concept as the foregoing method embodiment, as shown in FIG. 10, an embodiment of this application further provides a data processing apparatus 1000. The data processing apparatus 1000 is configured to perform an operation performed by the first device in the foregoing data processing method. The data processing apparatus 1000 includes a data fusion module 1001 and a receiving module 1002. Specifically:

The data fusion module 1001 is configured to obtain identification information of a second device;

The receiving module 1002 is configured to receive a first message sent by a second device, where the first message includes original data, and the first message indicates the identification information.

Optionally, the receiving module 1002 is further configured to receive a second message sent by a third device, where the second message includes first abstract data, and the second message indicates the identification information.

Optionally, the second device and the third device are a same device.

Optionally, the data fusion module 1001 is further configured to establish an association relationship between the original data and the first abstract data based on the identification information.

Optionally, the data processing apparatus 1000 further includes a data abstraction module 1003.

The data abstraction module 1003 is configured to determine second abstract data based on the original data.

Optionally, the data fusion module 1001 is further configured to update the abstract data based on the original data. The abstract data includes at least one of the first abstract data and the second abstract data.

Optionally, the data fusion module 1001 is further configured to establish a data path of the original data based on the identification information.

Optionally, the data fusion module 1001 is further configured to establish a data path of the first abstract data based on the identification information.

Optionally, the identification information includes any one or more of the following: an inherent identifier ID of the second device, an application layer ID allocated by the first device to the second device, an internet protocol IP address, a media access control MAC layer address, a port number, or a timestamp.

Optionally, the receiving module 1002 is further configured to receive the identification information sent by the second device, or receive a registration message sent by the second device. The data fusion module 1001 is further configured to allocate the identification information to the second device based on the registration message.

It is clear that another module, for example, a configuration module, may alternatively allocate the identification information to the second device based on the registration message. Division of modules in this application is merely an example. In actual application, division may be alternatively performed in another manner or based on another function.

The data processing apparatus 1000 is a chip or an integrated circuit.

The data processing apparatus 1000 is an MDC.

Based on a same concept as the foregoing method embodiment, as shown in FIG. 11, an embodiment of this application further provides a data processing apparatus 1100. The data processing apparatus 1100 is configured to perform an operation performed by the first device in the foregoing data processing method. The data processing apparatus 1100 includes a transceiver 1101, a processor 1102, and a memory 1103. The memory 1103 is optional. The memory 1103 is configured to store the programs executed by the processor 1102. When the data processing apparatus 1100 is configured to implement an operation performed by the first device in the foregoing method embodiment, the processor 1102 is configured to invoke a group of programs. When the programs are executed, the processor 1102 is enabled to perform the operation performed by the first device in the foregoing method embodiment. The function module receiving module 1002 in FIG. 10 may be implemented by using the transceiver 1101, and the data fusion module 1001 and the data abstraction module 1003 may be implemented by using the processor 1102.

The processor 1102 may be a central processing unit (central processing unit, CPU), a network processor (network processor, NP), or a combination of a CPU and an NP.

The processor 1102 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory 1103 may include a volatile memory (volatile memory), for example, a random-access memory (random-access memory, RAM). The memory 1103 may further include a non-volatile memory (non-volatile memory), for example, a flash memory (flash memory), a hard disk drive (hard disk drive, HDD), or a solid-state drive (solid-state drive, SSD). The memory 1103 may further include a combination of the foregoing types of memories.

In the data processing method provided in the foregoing embodiment of this application, some or all of the described operations and functions performed by the first device may be completed by using the chip or the integrated circuit.

An embodiment of this application further provides a chip, including a processor, configured to support the data processing apparatus 1000 and the data processing apparatus 1100 in implementing functions of the first device in the method provided in the foregoing embodiment. In a possible design, the chip is connected to a memory or the chip includes a memory. The memory is configured to store a program instruction and data that are necessary for the apparatus.

In a possible implementation, the chip may perform operations performed by the data fusion module 1001 and the data abstraction module 1003 in the data processing apparatus 1000.

In another possible implementation, the chip may perform an operation performed by the data fusion module 1001 in the data processing apparatus 1000. The data abstraction module 1003 is executed by using another chip. When the data abstraction module 1003 is executed by using the another chip, the another chip is configured to obtain second abstract data, and the foregoing chip performs an operation performed by the data fusion module 1001 in the data processing apparatus 1000, including receiving the second abstract data from the foregoing another chip.

An embodiment of this application provides a computer storage medium that stores a computer program. The computer program includes instructions used to perform the data processing method provided in the foregoing embodiment.

An embodiment of this application provides a computer program product including instructions. When the computer program product runs on a computer, the computer is enabled to perform the data processing method provided in the foregoing embodiment.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of this application have been described, persons skilled in the art can make changes and modifications to these embodiments once they learn the basic inventive concept. Therefore, the following claims are intended to be construed as to cover the preferred embodiments and all changes and modifications falling within the scope of this application.

It is clear that persons skilled in the art can make various modifications and variations to the embodiments of this application without departing from the spirit and scope of the embodiments of this application. This application is intended to cover these modifications and variations provided that they fall within the scope of protection defined by the following claims and their equivalent technologies.

## Claims

1. A data processing method, comprising:
obtaining, by a first device, identification information of a second device; and
receiving, by the first device, a first message sent by the second device, wherein the first message comprises original data, and the first message indicates the identification information.

2. The method according to claim 1, wherein the method further comprises:
receiving, by the first device, a second message sent by a third device, wherein the second message comprises first abstract data, and the second message indicates the identification information.

3. The method according to claim 2, wherein the second device and the third device are a same device.

4. The method according to claim 2 or 3, wherein the method further comprises:
establishing, by the first device, an association relationship between the original data and the first abstract data based on the identification information.

5. The method according to any one of claims 1 to 4, wherein the method further comprises:
determining, by the first device, second abstract data based on the original data.

6. The method according to any one of claims 2 to 5, wherein the method further comprises:
updating, by the first device, abstract data based on the original data, wherein the abstract data comprises at least one of the first abstract data and the second abstract data.

7. The method according to any one of claims 1 to 6, wherein the method further comprises:
establishing, by the first device, a data path of the original data based on the identification information.

8. The method according to any one of claims 2 to 7, wherein the method further comprises:
establishing, by the first device, a data path of the first abstract data based on the identification information.

9. The method according to any one of claims 1 to 8, wherein the identification information comprises any one or more of the following: an inherent identifier ID of the second device, an application layer ID allocated by the first device to the second device, an internet protocol IP address, a media access control MAC layer address, a port number, or a timestamp.

10. The method according to any one of claims 1 to 9, wherein the method further comprises:
receiving, by the first device, the identification information sent by the second device; or
receiving, by the first device, a registration message sent by the second device, and allocating, by the first device, the identification information to the second device based on the registration message.

11. A data processing apparatus, comprising:
a data fusion module, configured to obtain identification information of a second device; and
a receiving module, configured to receive a first message sent by the second device, wherein the first message comprises original data, and the first message indicates the identification information.

12. The apparatus according to claim 11, wherein the receiving module is further configured to:
receive a second message sent by a third device, wherein the second message comprises first abstract data, and the second message indicates the identification information.

13. The apparatus according to claim 12, wherein the second device and the third device are a same device.

14. The apparatus according to claim 12 or 13, wherein the data fusion module is further configured to:
establish an association relationship between the original data and the first abstract data based on the identification information.

15. The apparatus according to any one of claims 11 to 14, wherein the apparatus further comprises a data abstraction module, wherein
the data abstraction module is configured to determine second abstract data based on the original data.

16. The apparatus according to any one of claims 11 to 15, wherein the data fusion module is further configured to:
update abstract data based on the original data, wherein the abstract data comprises at least one of the first abstract data and the second abstract data.

17. The apparatus according to any one of claims 11 to 16, wherein the data fusion module is further configured to:
establish a data path of the original data based on the identification information.

18. The apparatus according to any one of claims 12 to 17, wherein the data fusion module is further configured to:
establish a data path of the first abstract data based on the identification information.

19. The apparatus according to any one of claims 11 to 18, wherein the identification information comprises any one or more of the following: an inherent identifier ID of the second device, an application layer ID allocated by the first device to the second device, an internet protocol IP address, a media access control MAC layer address, a port number, or a timestamp.

20. The apparatus according to any one of claims 11 to 19, wherein the receiving module is further configured to:
receive the identification information sent by the second device; or
receive a registration message sent by the second device, wherein the data fusion module is further configured to allocate the identification information to the second device based on the registration message.

21. The apparatus according to any one of claims 11 to 20, wherein the apparatus is a chip or an integrated circuit.

22. A computer-readable storage medium, wherein the computer storage medium stores computer-readable instructions, and when a computer reads and executes the computer-readable instructions, the computer is enabled to perform the method according to any one of claims 1 to 10.

23. A computer program product, wherein when a computer reads and executes the computer program product, the computer is enabled to perform the method according to any one of claims 1 to 10.
